# EUROPÄISCHE PATENTSCHRIFT

(11) **EP 1 853 658 B1**
(45) Veröffentlichungstag und Bekanntmachung des Hinweises auf die Patenterteilung: **18.02.2009**
(21) Anmeldenummer: 06707382.5
(22) Anmeldetag: 02.03.2006
(51) Int. Cl.: C08K 3/36, C08J 3/12

(54) **VERWENDUNG VON SILICIUMOXID-VERBINDUNGEN ALS RIESELHILFE BEI DER HERSTELLUNG VON POLYVINYLACETAT-FESTHARZEN**
USE OF SILICON OXIDE COMPOUNDS AS FREE-FLOW AGENTS IN THE PRODUCTION OF SOLID POLYVINYL ACETATE RESINS
UTILISATION DE COMPOSES DE DIOXYDE DE SILICIUM EN TANT QU'AUXILIAIRES D'ECOULEMENT DANS LA FABRICATION DE RESINES SOLIDES DE POLYVINYLACETATE

(30) Priorität: 03.03.2005 DE 102005009782
(43) Veröffentlichungstag der Anmeldung: 14.11.2007
(73) Patentinhaber: Wacker Chemie AG, 81737 München (DE)
(72) Erfinder: GRÄWE, René, 84489 Burghausen (DE); BIBER, Marcus, 84508 Burgkirchen (DE); WIMMER, Thomas, 84489 Burghausen (DE)
(74) Vertreter: Schuderer, Michael
(86) Internationale Anmeldenummer: PCT/EP2006/001909
(87) Internationale Veröffentlichungsnummer: WO 2006/092299

(56) Entgegenhaltungen:
- DD-A1- 153 377
- DE-A1- 1 719 317
- DE-A1- 4 030 638
- DE-A1- 10 317 882
- DE-A1- 19 535 833
- US-A- 5 424 080

## Beschreibung

Die Erfindung betrifft die Verwendung von hydrophilen Siliciumoxid-Verbindungen gemäß Anspruch 1 als Rieselhilfe bei der Herstellung von Polyvinylacetat-Festharzen.

Unter Festharzen werden in dieser Anmeldung Vinylacetat-Polymerisate verstanden, welche in fester Form vorliegen und mittels Massepolymerisation oder Suspensionspolymerisation hergestellt werden. Die mittels Massepolymerisation erhältlichen Polyvinylacetat-Festharze finden insbesondere bei der Herstellung von Kaugummimasse Verwendung, während die mittels Suspensionspolymerisation hergestellten Polyvinylacetat-Festharze zur Herstellung von Formkörpern, Klebstoffen, Lacken und als low-profile-Additive Verwendung finden.

Nachteilig ist, dass die im allgemeinen in Form von Pellets oder als Pulver vorliegenden Polyvinylacetat-Festharze aufgrund deren relativ niedrigen Glastemperatur Tg bzw. deren Oberflächenklebrigkeit und elektrischer Aufladung zur Agglomeration neigen, was die Verwendung der Polyvinylacetat-Festharze als Rohstoffe für eine weitere Verarbeitung erschwert. Die Lagergrenze von Polyvinylacetat-Festharzen wird daher bereits bei einer Temperatur von circa 25°C erreicht.

Aus dem Bereich der in Wasser redispergierbaren Polymerpulver ist bekannt, durch Zugabe von Antibackmittel deren Fließverhalten zu verbessern. Redispergierbare Polymerpulver, beispielsweise auf Polyvinylacetatbasis, werden dadurch erhalten, indem in wässrigem Medium polymerisiert wird, und die damit erhaltene Polymerdispersion nach Zugabe von wasserlöslichem Schutzkolloid, üblicherweise Polyvinylalkohol, getrocknet wird. Die Polymerisatteilchen liegen deshalb mit einer relativ "harten" Schutzkolloidhülle vor, die einerseits die Redispergierbarkeit in Wasser sicherstellt, darüberhinaus aber die Verbackung verhindert, sodass solche Pulver bis zu Temperaturen von 60°C lagerstabil bleiben können. Als Antibackmittel für redispergierbare Polymerpulver wird in der DE 197 32 333 A1 ein Gemisch aus hydrophiler und hydrophober Kieselsäure empfohlen. In der DE 195 45 608 A1 und der DE 103 17 882 A1 wird eine Vielzahl von Antibackmitteln für redispergierbare Polymerpulver empfohlen, wie Carbonate, Talk, Gips, Kieselsäure, Kaoline, hydrophob modifizierte Kieselsäure und hydrophob modifiziertes Siliciumoxid.

In der DE 102 51 790 A1 wird gezeigt, dass relativ hydrophile Festharze wie Polyamide mit hydrophobierter Kieselsäure keine Verklumpungen zeigen, während mit hydrophiler Kieselsäure ein klumpiges Pulver erhalten wird.

Es bestand die Aufgabe, Polyvinylacetat-Festharze so zu modifixieren, dass diese Nachteile überwunden werden.

Gegenstand der Erfindung ist die Verwendung von hydrophilen Siliciumoxid-Verbindungen aus der Gruppe umfassend Talkum und pyrogene Kieselsäure als Rieselhilfe bei der Herstellung von Polyvinylacetat-Festharzen.

Unter hydrophilen Siliciumoxidverbindungen versteht man Verbindungen, welche im Vergleich zu rein oxidischen Verbindungen wie beispielsweise Korund, einen hydrophileren Charakter zeigen. Geeignete Siliciumoxidverbindungen sind Talkum und pyrogene Kieselsäure. Die Siliciumoxidverbindungen werden in einer Menge von 0.01 bis 5.0 Gew.-%, vorzugsweise 0.01 bis 0.5 Gew.-%, jeweils bezogen auf das Festharz, eingesetzt.

Die Polyvinylacetat-Festharze können in bekannter Weise nach dem Massepolymerisationsverfahren hergestellt werden. Bei diesem Verfahren wird der Schmelze kein Lösemittel zugesetzt um die Viskosität zu reduzieren. Es werden Regler eingesetzt, die zur Einstellung des Molgewichts dienen. Üblichweise kann dies Aceton, Isopropanol oder auch Acetaldehyd sein.

Nach der Polymerisation wird das als Schmelze anfallende Produkt über Kühlbänder oder unter Wasser gekühlt, und anschließend zu Pellets oder Pastillen, üblicherweise mit einem Durchmesser von 3 bis 4 mm, geformt. Die Siliciumoxid-Verbindung wird vorzugsweise nach der. Pelletierung, beispielsweise über einen Dosierteller, in den Pelletstrom dosiert. Bei der Massepolymerisation fallen relativ niedermolekulare Polyvinylacetat-Festharze an, mit einem gewichtsmittleren Molekulargewicht Mw von vorzugsweise 10000 bis 20000.

Vorzugsweise wird den mittels Massepolymerisation erhaltenen Polyvinylacetat-Festharzen Talkum als Rieselhilfe zugegeben.

Die Polyvinylacetat-Festharze können auch mittels Suspensionspolymerisation in wässrigem Medium hergestellt werden. Durch die Zugabe eines geeigneten Schutzkolloids beispielsweise Polyvinylalkohol, Polyvinylpyrollidon, Cellulose,und hydrophile Füllstoff wie CaCO₃ wird das Monomertröpfchen stabilisert und polymerisiert im Ganzen aus. Die Tropfengröße kann eingestellt werden und bewegt sich üblicherweise in der Größenordnung kleiner 3 mm, wobei der bevorzugte Bereich von 0.2 bis 2 mm, und der beste Bereich von 0.5 bis 1.5 mm liegt.

Die in Wasser dispergierten Polyvinylacetat-Teilchen werden anschließen zentrifugiert, und das damit erhaltene noch etwa 10 Gew.-% Restwasser enthaltende Polymerisat, vorzugsweise mittels Wirbelschicht-Trocknung zu einem Pulver getrocknet. Besonders bevorzugt wird die Trocknung mit einem Haartrockner durchgeführt. Bei den Suspensionspolymerisaten wird die Siliciumoxid-Verbindung dem wasserhaltigen Zentrifugat vor dessen Trocknung zugemischt. Bei der Suspensionspolymerisation werden relativ hochmolekulare Polyvinylacetat-Festharze mit einem gewichtsmittleren Molekulargewicht Mw von vorzugsweise 100000 bis 500000 erhalten.

Vorzugsweise wird den mittels Suspensionspolymerisation erhaltenen Polyvinylacetat-Festharzen pyrogene Kieselsäure als Rieselhilfe zugegeben.

Die nachfolgenden Beispiele dienen der weiteren Erläuterung der Erfindung:

### Beispiel 1:

Es wurden zwei Polyvinylacetat-Festharze, welche jeweils nach dem Massepolymerisationverfahren hergestellt wurden, getestet: Vinnapas B 1.5 sp mit einem Molekulargewicht Mw von ca. 10000 und Vinnapas B 5 sp mit einem Molekulargewicht Mw von ca. 20000. Bei beiden Festharzen wurden während der Pelletierung 0.1 Gew.-% Talkum zudosiert, jeweils bezogen auf das Gewicht des Festharzes. Zum Vergleich wurden die beiden Festharze ohne Zugabe von Talkum pelletiert.

Die Neigung zum Blocken wurde wie folgt getestet:
Jeweils 100 g der Festharze wurden in 10 cm x 10 cm große Polyethylenbeutel eingefüllt und die Beutel verschweißt. Anschließend wurden die Beutel bei 30°C über 5 Stunden gelagert und jeweils mit einem 5 kg Gewicht belastet.

Die Blockneigung wurde qualitativ beurteilt und nach dem Schulnotensystem bewertet: 1 = kein Verblocken bis 6 = starkes Verblocken.

Die Ergebnisse sind in Tabelle 1 zusammengefasst:

| Probe | B 1.5 sp. ohne Talkum | B 1.5 sp. mit Talkum | B 5 sp. ohne Talkum | B 5 sp. mit Talkum |
|---|---|---|---|---|
| Blocknote | 5 | 2 | 4 | 1 |

Es wurde damit festgestellt, dass bereits sehr geringe Mengen an Talkum das Lagerverhalten von niedermolekularen Festharzen sehr positiv beeinflußen. Die Blockneigung wird selbst bei Lagerung über Raumtemperatur drastisch reduziert.

### Vergleichsbeispiel 2:

Es wurde wie in Beispiel 1 vorgegangen, mit dem Unterschied, dass während der Pelletierung 0.1 Gew.-% Kaolin zudosiert wurde. Zum Vergleich wurden die beiden Festharze auch ohne Zugabe von Rieselhilfe pelletiert.

Die Ergebnisse sind in Tabelle 2 zusammengefasst:

| Probe | B 1.5 sp. ohne Rieselhilfe | B 1.5 sp. Kaolin | B 5 sp. ohne Rieselhilfe | B 5 sp. Kaolin |
|---|---|---|---|---|
| Blocknote | 5 | 5 | 4 | 4 |

Es hat sich gezeigt, dass selbst mit relativ hydrophilen Rieselhilfen wie Kaolin (Aluminiumsilikat), welche nicht der Gruppe umfassend Kieselsäure und Talkum (Magnesiumsilikat) angehören, keine Verbesserung der Blockneigung zu erreichen ist.

### Beispiel 3:

Es wurden zwei Polyvinylacetat-Festharze, welche jeweils nach dem Suspensionspolymerisationverfahren hergestellt wurden getestet: Vinnapas UW 1 mit einem Molekulargewicht Mw von ca. 100000 und Vinnapas UW 10 mit einem Molekulargewicht Mw von ca. 350000. Bei beiden Festharzen wurden nach der Zentrifugierung und vor der Wirbelschichttrocknung 0.2 Gew.-% pyrogene Kieselsäure (Wacker HDK V15) zudosiert, jeweils bezogen auf das Gewicht des Festharzes. Zum Vergleich wurden die beiden Festharze auch ohne Zugabe von pyrogener Kieselsäure getrocknet.

Bei der Wirbelschichttrocknung mit Haartrockner wurde festgestellt, dass sich die Trocknungsleistung bei den mit pyrogener Kieselsäure modifizierten Suspensionspolymerisaten von 200 kg/h auf 300 bis 600 kg/h steigern läßt.

Die Neigung zum Blocken wurde wie folgt getestet:
Jeweils 100 g der Festharze wurden in 10 cm x 10 cm große Polyethylenbeutel eingefüllt und die Beutel verschweißt. Anschließend wurden die Beutel bei 50°C über 5 Stunden gelagert und jeweils mit einem 5 kg Gewicht belastet.

Die Blockneigung wurde qualitativ beurteilt und nach dem Schulnotensystem bewertet: 1 = kein Verblocken bis 6 = starkes Verblocken.

Die Ergebnisse sind in Tabelle 3 zusammengefasst:

| Probe | UW 1 ohne HDK | UW 1 mit HDK | UW 10 ohne HDK | UW 10 mit HDK |
|---|---|---|---|---|
| Blocknote | 5 | 2 | 4 | 1 |

Es wurde damit festgestellt, dass bereits sehr geringe Mengen an pyrogener Kieselsäure das Lagerverhalten der Festharze sehr positiv beeinflußen. Die Blockneigung wird selbst bei Lagerung deutlich über Raumtemperatur drastisch reduziert.

### Vergleichsbeispiel 4:

Es wurde wie in Beispiel 1 vorgegangen, mit dem Unterschied, dass während der Pelletierung 0.1 Gew.-% hydrophobe Kieselsäure (Aerosil^{R} R 812)) zudosiert wurde. Zum Vergleich wurden die beiden Festharze auch ohne Zugabe von Rieselhilfe pelletiert.

Die Ergebnisse sind in Tabelle 4 zusammengefasst.

| Probe | B 1.5 sp. ohne Rieselhilfe | B 1.5 sp. Hydrophobe Kieselsäure | B 5 sp. ohne Rieselhilfe | B 5 sp. Hydrophobe Kieselsäure |
|---|---|---|---|---|
| Blocknote | 5 | 4 | 4 | 3 |

Die Ergebnisse zeigen, dass mit hydrophober Kieselsäure das Lagerverhalten der Polyvinylacetat-Festharze kaum verbessert wird.

## Patentansprüche

1. Verwendung von hydrophilen Siliciumoxid-Verbindungen als Rieselhilfe bei der Herstellung von Polyvinylacetat-Festharzen, **dadurch gekennzeichnet, dass**
a) bei den mittels Massepolymerisation erhaltenen Polyvinylacetat-Festharzen Talkum als Rieselhilfe verwendet wird und die Rieselhilfe bei der Pelletierung der Festharze zugegeben wird, oder
b) bei den mittels Suspensionspolymerisation erhaltenen Polyvinylacetat-Festharzen pyrogene Kieselsäure als Rieselhilfe verwendet wird und die Rieselhilfe vor der Wirbelschichttrocknung zugegeben wird.

2. Verwendung nach Anspruch 1, **dadurch gekennzeichnet, dass** die Siliciumoxidverbindungen in einer Menge von 0.01 bis 5.0 Gew.-%, bezogen auf das Festharz, eingesetzt werden.

3. Verwendung der gemäß Anspruch 1 oder 2 erhaltenen Polyvinylacetat-Festharzen zur Herstellung von Kaugummimassen.

4. Verwendung der gemäß Anspruch 1 oder 2 erhaltenen Polyvinylacetat-Festharze zur Herstellung von Formkörpern, Klebstoffen, Lacken und als low-profile-Additive.

## Claims

1. Use of hydrophilic silicon oxide compounds as free-flow agent in the production of solid polyvinyl acetate resins, **characterized in that**
a) talc is used as a free-flow agent in the case of the solid polyvinyl acetate resins obtained by means of mass polymerization and the free-flow agent is added during the pelletization of the solid resins, or
b) pyrogenic silicic acid is used as a free-flow agent in the case of the solid polyvinyl acetate resins obtained by means of suspension polymerization and the free-flow agent is added before the fluidized-bed drying.

2. Use according to Claim 1, **characterized in that** the silicon oxide compounds are used in an amount of from 0.01 to 5.0% by weight, based on the solid resin.

3. Use of the solid polyvinyl acetate resins obtained according to Claim 1 or 2 for the production of chewing gum materials.

4. Use of the solid polyvinyl acetate resins obtained according to Claim 1 or 2 for the production of moldings, adhesives and finishes and as low-profile additives.

## Revendications

1. Utilisation de composés à base d'oxyde de silicium en tant qu'adjuvants d'écoulement dans la production de résines poly(acétate de vinyle) solides **caractérisée en ce que**
a) on utilise du talc comme adjuvant d'écoulement dans les résines poly(acétate de vinyle) solides obtenues par polymérisation en masse et on ajoute l'adjuvant d'écoulement lors de la granulation des résines solides, ou
b) on utilise de l'acide silicique pyrogéné comme adjuvant d'écoulement dans les résines poly(acétate de vinyle) solides obtenues par polymérisation en suspension et on ajoute l'adjuvant d'écoulement avant le séchage en lit fluidisé.

2. Utilisation selon la revendication 1, **caractérisée en ce que** les composés à base d'oxyde de silicium sont utilisés en une quantité de 0,01 à 5,0 % en poids, par rapport à la résine solide.

3. Utilisation des résines poly(acétate de vinyle) solides obtenues selon la revendication 1 ou 2, pour la fabrication de matières pour gommes à mâcher.

4. Utilisation des résines poly(acétate de vinyle) solides obtenues selon la revendication 1 ou 2, pour la fabrication de corps moulés, d'adhésifs, de peintures et en tant qu'additifs *low-profile.*
